# DEMANDE DE BREVET EUROPEEN

(11) **EP 0 903 950 A1**
(43) Date de publication de la demande: **24.03.1999**
(21) Numéro de dépôt: 98402215.2
(22) Date de dépôt: 08.09.1998
(51) Int. Cl.: H04Q 7/36

(54) **Procédé de transfert de communication entre deux cellules d'un résaeu de radio-communication cellulaire numérique**

(30) Priorité: 08.09.1997 FR 9711124
(71) Demandeur: ALCATEL, 75008 Paris (FR)
(72) Inventeur: Begassat, Yann, 75015 Paris (FR); Kumar, Vinod, 75005 Paris (FR)
(74) Mandataire: El Manouni, Josiane

(57) **Abrégé**

L'invention concerne un procédé de transfert de communication entre deux cellules (14) et (19) d'un réseau de radio-communication cellulaire et numérique, dans lequel chacune desdites cellules comprend un ensemble d'au moins deux relais d'émission et de réception (13) géographiquement répartis dans ladite cellule, chacun desdits relais pouvant émettre des signaux vers des stations mobiles présentes dans une zone de ladite cellule, et recevoir des signaux émis par lesdites stations mobiles dans ladite zone, un jeu d'au moins un desdits relais (16) et (17) étant sélectivement affecté à chaque communication avec une station mobile (11), de façon que les échanges de signaux avec ladite station mobile (11) ne portent que sur une sous-partie de la cellule, et, lorsque ladite station mobile (11) passe d'une première cellule (14) à une seconde cellule (19), au moins un paramètre caractérisant la communication est transmis (110) de la station de base contrôlant ladite première cellule (14) à la station de base contrôlant ladite seconde cellule (19), de façon à permettre la continuité de l'utilisation dudit au moins un paramètre.

## Description

Le domaine de l'invention est celui des communications numériques, dans des systèmes de radio-communication cellulaire. L'invention s'applique en particulier aux systèmes mettant en oeuvre des transmissions numériques (voix, données, signalisation...) selon la technique à accès multiple par répartition dans le temps AMRT (ou TDMA pour "Time Division Multiple Access" en langue anglaise), et par exemple aux réseaux de type GSM (pour "Global System for Mobile Communications" en anglais).

Plus précisément, l'invention concerne le transfert de communications entre deux cellules voisines d'un réseau de radio-communication cellulaire numérique (ou "hand-over", en anglais).

Un réseau de radio-communication cellulaire, tel que les réseaux GSM ou DCS, comprend plusieurs cellules contrôlées chacune par une station de base. Classiquement, lorsqu'une station mobile passe d'une cellule de départ à une cellule de destination, on met en oeuvre un mécanisme de transfert de la communication, de façon que la station mobile change de station de base gérant la communication.

Cette opération, appelée "hand-over", est relativement complexe. Vue de la station mobile, tout se passe comme si une nouvelle communication était initiée dans la nouvelle cellule avec ré-allocation de paramètres de communication (fréquences utilisées, lois de saut de fréquences, intervalles de temps,..). Le réseau (les stations de base et les dispositifs en amont de ces stations de base) gère la continuité de la communication avec le terminal distant.

Cette solution connue présente l'inconvénient majeur de produire, lors de ce transfert de communication d'une première cellule à une seconde cellule, une perte temporaire d'informations (en général quelques trames), qui entraîne un bruit désagréable audible pour les utilisateurs.

De plus, elle impose de nombreux traitements, à chaque transfert, tant dans le réseau que dans les stations mobiles concernées (qui doivent adopter les nouveaux paramètres de communication).

De plus, cette solution classique nécessite une planification fastidieuse pour l'allocation de fréquence pour chaque cellule du réseau. Il est en effet nécessaire que deux cellules voisines n'utilisent pas les mêmes fréquences, pour éviter les interférences.

Il est actuellement envisagé d'utiliser des micro-cellules, notamment en milieu urbain. Le placement des stations de base (ou de leurs antennes) sous le niveau des toits autorise en effet un motif de réutilisation de fréquences plus serré (la "portée" de la station de base reste localisée, donc l'interférence co-canal est réduite). La solution micro-cellulaire est donc plus efficace spectralement et le fait que les cellules sont plus petites permet d'augmenter la capacité (exprimée en Erlang/km²/Mhz) par rapport à une solution macro-cellulaire conventionnelle et pour un spectre donné.

Cette technique permet donc de résoudre le problème de la capacité d'écoulement du trafic. En revanche, elle impose des transferts de cellules incessants, avec tous les problèmes listés ci-dessus.

En outre, des cellules dites "parapluie" (ou "umbrella cells" en langue anglaise) sont nécessaires. Malheureusement, ces cellules "parapluie" constituent une couche supplémentaire qui rajoute de la complexité au système. En effet, la planification et la mise au point d'un tel système sont très délicates.

L'invention a notamment pour objectif de pallier ces différents inconvénients de l'état de la technique.

Plus précisément, un des objectifs de la présente invention est de fournir un procédé de transfert de communication entre deux cellules d'un réseau de radio-communication cellulaire numérique gérant ce transfert de communications de manière transparente, ou quasi-transparente, vis-à-vis de l'utilisateur de la station mobile, ainsi que de la station mobile elle-même, en terme de traitements à effectuer.

Un objectif complémentaire de l'invention est de fournir un tel procédé permettant d'assurer une communication sans interruption lors d'un changement de cellule de la station mobile associée à cette communication.

Notamment, un objectif particulier de l'invention est de fournir un tel procédé permettant d'améliorer la réutilisation des fréquences.

L'invention a également pour objectif de fournir un tel procédé, permettant de simplifier l'allocation de fréquences aux cellules, lors de la configuration du réseau.

Encore un autre objectif de l'invention est de fournir un tel procédé, assurant une qualité de la communication (représentée par exemple par le niveau de puissance reçu ou le rapport signal à bruit et/ou pondéré par le rapport signal à interférences) et une qualité de service (correspondant au taux de blocage (toutes les ressources physiques sont utilisées et/ou les ressources non utilisées sont indisponibles interdisant tout nouvel appel) et au taux de perte d'appel (directement lié aux problèmes de "hand-over")).

Un autre objectif de l'invention est encore, de fournir un tel procédé, limitant les puissances radio émises et par conséquent de fournir un tel procédé permettant de limiter le niveau d'interférences sur le spectre radio (fréquences radio) alloué au réseau.

Un autre objectif de l'invention est de fournir un tel procédé permettant d'améliorer la qualité de communication lors du transfert de communication d'une cellule à une autre. Cet objectif peut se traduire par les sous-objectifs suivants :
- améliorer la réactivité du système ;
- combattre l'effet "ping-pong" (passage incessant d'une cellule à l'autre, lorsque la station mobile est au voisinage de la frontière).

Ces différents objectifs, ainsi que d'autres qui apparaîtront par la suite, sont atteints selon l'invention à l'aide du procédé de transfert de communications entre deux cellules d'un réseau de radio-communication cellulaire et numérique, procédé dans lequel chacune desdites cellules comprend un ensemble d'au moins deux relais d'émission et de réception géographiquement répartis dans ladite cellule, chacun desdits relais pouvant émettre des signaux vers des stations mobiles présentes dans une zone de ladite cellule, et recevoir des signaux émis par lesdites stations mobiles dans ladite zone, un jeu d'au moins un desdits relais étant sélectivement affecté à chaque communication avec une station mobile, de façon que les échanges de signaux avec ladite station mobile ne portent que sur une sous-partie de la cellule, ledit procédé assurant la transmission d'au moins un paramètre caractérisant la communication de manière unique de la station de base contrôlant ladite première cellule à la station de base contrôlant ladite seconde cellule, de façon à permettre la continuité de l'utilisation dudit au moins un paramètre, lorsque ladite station mobile passe de la première cellule à la seconde cellule.

Le principe général de l'invention repose donc sur la répartition géographique d'une pluralité de relais dans chaque cellule du réseau. On peut ainsi effectuer une sélection d'au moins deux relais d'une même cellule pour assurer les transmissions des signaux avec une station mobile pour les voies montante et descendante de la communication.

Lors d'un changement de cellule de la station mobile en communication, la station de base qui gère la première cellule transmet au moins un paramètre de la communication qui s'est tenue dans la première cellule, à la station de base qui doit prendre en charge la suite de la communication. En d'autres termes, on conserve ce(s) paramètre(s) pour la suite de la communication. Ces paramètres sont notamment ceux permettant de caractériser de manière unique une communication (canal, cellule d'origine,"time-slot", jeu de fréquences, ...).

L'invention permet donc à la station mobile de ne pas avoir besoin de s'impliquer (ou très peu) dans le déroulement de cette transmission de paramètre(s) et/ou même d'être tenu au courant de cette opération, et/ou de savoir qu'elle change de cellule.

En d'autres termes, ce transfert de communication est essentiellement transparent au niveau de la station mobile et donc de son utilisateur.

Dans un mode de réalisation préférentiel, chacune desdites cellules comprend un centre de concentration, traitant les signaux reçus par chacun desdits relais, et délivrant à chacun desdits relais des signaux à émettre, les centres de concentration et/ou les relais d'un ensemble de cellules étant synchronisés.

Cette synchronisation s'effectue avantageusement à deux niveaux :
- au niveau bit ;
- au niveau trame.

Dans ce mode de réalisation préférentiel, la station de base, qui comprend le centre de concentration et la pluralité de relais, peut être dite "distribuée".

Dans ce mode de réalisation préférentiel, on garantit une efficacité optimale du transfert de communications. Cela permet de ne pas perdre de données propres à la communication devant être transférée, et de garder le(s) même(s) paramètre(s) tout au long d'une communication. Par voie de conséquence, une qualité de communication optimale est maintenue.

Selon un mode de réalisation avantageux, chacune desdites communications met en oeuvre une technique de saut de fréquence.

Avantageusement, lesdites cellules utilisent, pour les communications, un même jeu de fréquences porteuses commun à toutes lesdites cellules, et une loi unique de saut de fréquences est affectée, lors d'une phase d'initialisation d'appel, à chacune desdites communications.

Dans le cas présent, on utilise avantageusement une loi de saut de fréquences lente (par exemple de trame en trame).

Préférentiellement, chacune desdites cellules utilise au moins une fréquence balise (classiquement une) qui lui est propre pour la transmission des données de signalisation.

Les fréquences balises (classiquement une seule par cellule) ou de signalisation, sur lesquelles transitent les informations permettant aux stations mobiles de se signaler, sont distinctes d'une cellule à une autre. En revanche, le canal de communication, sur lequel les informations de communication sont échangées, reste le même du début à la fin de la communication. Il est clair que cette dernière affirmation ne reste vraie que tant que la station mobile évolue dans la zone de couverture du réseau de cellules à stations de base dites "distribuées".

Avantageusement, les communications de deux cellules adjacentes utilisent le même jeu de fréquences de communication, et
- les lois de saut de fréquences utilisées par de communications initiées au sein d'une même cellule sont orthogonales entre elles ;
- les lois de saut de fréquences utilisées par de communications initiées par deux cellules sont déterminées indépendamment les unes des autres.

Ainsi, on évite, les interférences au sein d'une même cellule. De plus, comme les lois de saut de fréquences initiées par deux cellules sont indépendantes, on diminue le niveau d'interférences entre cellules voisines, tout en ayant un facteur de réutilisation des fréquences de communication égal à 1.

De façon préférentielle, ledit au moins un paramètre caractérisant la communication comprend au moins une des indications appartenant au groupe comprenant :
- un numéro d'intervalle de temps et un numéro de trame ;
- une indication de loi de saut de fréquence ;
- une indication des derniers meilleurs relais serveurs connus ;
- une indication de la cellule qui a initié la communication.

Ces paramètres donnent donc les informations nécessaires pour la synchronisation (un numéro d'intervalle de temps et un numéro de trame), pour les lois de saut de fréquences (de communication) à utiliser (indication de la loi de saut de fréquences), pour prévoir les relais qui seront impliqués dans la nouvelle cellule (indication des derniers meilleurs relais serveurs connus), pour prévoir le centre de concentration qu'il faut avertir et/ou pour conserver le canal et l'identifiant de la cellule d'origine où a été initié la communication, afin de pouvoir restituer le canal de communication à cette cellule en fin de communication (indication de la cellule qui a initié la communication).

L'indication de loi de saut de fréquences correspond par exemple en GSM à une indication de la première fréquence à utiliser dans la fréquence de saut, à une indication du groupe de fréquences que la loi de saut de fréquences est autorisée à utiliser et une indication de générateur de séquence de saut.

Il est clair que l'invention ne se limite pas aux différentes indications figurant dans cette liste pour caractériser la communication de manière unique.

Avantageusement, chacune desdites cellules met en oeuvre une étape de sélection des meilleurs relais, selon un critère de sélection prédéterminé, pour chaque station mobile en communication. L'affectation d'un jeu de relais à ladite communication dans la seconde cellule, et le transfert de ladite première cellule à ladite seconde cellule tiennent compte de cette sélection.

Ainsi, le transfert ne s'effectue pas cellule à cellule, en terme de couverture géographique, mais seulement sur des régions de ces cellules correspondant aux relais activés.

Cette technique de sélection des meilleurs relais permet de réduire les puissances utilisées, et de ré-utiliser les mêmes fréquences d'une cellule à l'autre, et, d'une façon générale, d'améliorer la qualité de la communication.

Selon un mode de réalisation avantageux, ledit critère de sélection repose sur l'analyse d'au moins une des informations appartenant au groupe comprenant :
- la puissance reçue par ledit relais pour ladite communication ;
- le rapport signal à bruit pour ladite communication ;
- le rapport signal à interférences pour ladite communication ;
- un taux d'erreur brut et/ou après décodage pour ladite communication ;
- un taux de perte de trame pour ladite communication ;
- une indication de positionnement géographique.

On notera que les rapports signal à bruit et signal à interférences sont particulièrement intéressants comme critères de sélection.

Il est clair que la combinaison de plusieurs de ces indications permet d'obtenir une sélection optimisée des meilleurs relais permettant au dispositif (centre(s) de concentration et relais) d'être réactif à tout moment (adaptation aux circonstances de communication).

Par exemple, on peut pondérer le niveau de la puissance moyenne reçue (lors d'une phase dite de communication active où l'appel est établi) de chaque relais par le rapport signal à interférences et/ou le rapport signal à bruit de ce même relais. Cette pondération consiste, par exemple, à utiliser un coefficient de pondération égal à 0 ou 1 selon que le rapport signal à interférences est inférieur ou supérieur à un seuil prédéterminé, pour la communication en cause. Cela permet notamment de basculer la sélection momentanément sur un autre relais différent de ceux sélectionnés, si un obstacle et/ou un brouilleur vient s'intercaler entre la station mobile en communication et l'un des relais sélectionnés.

Eventuellement, une indication de positionnement géographique provenant d'un autre système, par exemple GPS, peut également être prise en compte.

Selon un mode de réalisation préférentiel, ladite analyse d'au moins une desdites informations s'effectue à partir :
- d'une moyenne des valeurs mesurées d'au moins une desdites informations sur une durée prédéterminée, lors d'une phase de communication active ;
- d'une unique valeur mesurée d'au moins une desdites informations, lors d'une phase d'initialisation d'une communication.

Dans le cas de la phase de communication active, la durée prédéterminée de moyennage correspond par exemple à un nombre fixe de trames.

Ainsi, en phase de communication active, le fait que cette analyse soit basée sur une valeur moyenne, permet que le dispositif (centre(s) de concentration et relais) ne réagisse pas instantanément. En d'autres termes, on intègre les données mesurées (par exemple calcul d'une moyenne) afin d'éviter des changements de relais inutiles et intempestifs, dûs par exemple à un défaut ponctuel.

En revanche, en phase d'initialisation d'une communication, le dispositif (centre(s) de concentration et relais) réagit très rapidement (par exemple sur une seule trame) et permet ainsi une présélection instantanée des meilleurs relais.

Selon un mode de réalisation avantageux, ledit jeu de relais comprend un nombre prédéterminé n des meilleurs relais selon ledit critère de sélection.

De façon préférentielle, l'affectation d'un jeu de relais est mise à jour périodiquement et/ou lorsqu'au moins un paramètre représentatif de la qualité de la communication est inférieure à un seuil prédéterminé.

Il est à noter que la période de réactualisation de l'information sur les meilleurs relais doit rester assez courte (par exemple une ou deux secondes) afin qu'une "relocalisation d'urgence" ne soit déclenchée que de manière occasionnelle. Une telle "relocalisation d'urgence" correspond à une nouvelle sélection des meilleurs relais lorsqu'un problème de qualité de la communication est détecté entre deux périodes consécutives.

Préférentiellement, chaque communication se voit affecter, lors de sa phase d'initialisation d'appel, une loi unique de saut de fréquences qui lui est propre et qu'elle conserve lors du transfert de ladite première cellule à ladite seconde cellule, et ladite loi de saut de fréquences propre à ladite communication est restituée à la cellule où l'appel a été initié lorsque ladite communication est terminée et/ou lorsque ladite station mobile est sortie de la zone de couverture dudit réseau.

Ainsi, à la fin de chaque communication ayant fait l'objet d'un "hand-over" et/ou lorsque la station mobile est sortie de la zone de couverture du réseau de cellules dites à stations de base distribuées, la loi de saut de fréquences, affectée lors d'une phase d'initialisation d'appel, est restituée à la cellule où l'appel a été initié, de manière à pouvoir l'affecter à une autre communication. En d'autres termes, tant qu'une communication donnée transférée à une autre cellule n'est pas terminée, la cellule où l'appel a été initié ne peut pas réallouer à une autre communication la loi de saut de fréquences propre à cette communication donnée. De cette façon, on réduit certains problèmes d'interférences.

Selon un mode de réalisation préférentiel de l'invention, lors d'une phase d'initialisation d'une communication, ladite étape de sélection est effectuée sur tous les relais de ladite cellule, de façon à effectuer une présélection des meilleurs relais pour continuer ladite communication.

Ainsi, lors de l'envoi d'une requête d'appel ou d'un message d'acquittement (par exemple sur un morceau de signal (ou "burst")) sur le canal "RACH" (pour "Random Access CHannel") en GSM, tous les relais de la cellule concernée participent à la sélection.

Avantageusement, lors d'une phase de communication active, ladite étape de sélection est effectuée uniquement sur le(s) relais déjà affecté(s) et au moins certain(s) relais disponible(s), de façon à réactualiser la sélection des meilleurs relais.

Ainsi, lorsqu'un appel est déjà établi, on se limite à opérer une sélection parmi les relais déjà affectés à la communication en cours et au moins certains de ceux qui sont disponibles (par exemple les plus proches de ceux déjà affectés). Il est clair que l'indisponibilité d'un relais peut avoir plusieurs causes, tel que notamment une panne ou une saturation en nombre de communications déjà supportées.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma simplifié d'un mode de réalisation particulier d'un système utilisant un procédé selon l'invention ;
- la figure 2 illustre de façon générale le procédé selon l'invention mis en oeuvre dans un système tel que celui de la figure 1.

L'invention concerne donc un procédé de transfert de communication entre deux cellules d'un réseau de radio-communication cellulaire et numérique.

L'invention repose notamment sur :
- la sélection de relais en fonction d'un critère dépendant de la qualité de la communication en cours, mettant en jeu des relais et un centre de concentration chargé de collecter les signaux émis par les relais ;
- le transfert de paramètres définissant de manière unique un canal de communication (ou au moins une partie de ces paramètres) qui est conservé sur toute la durée d'une communication, permettant ainsi de garantir la continuité d'un appel.

Ce transfert de paramètres s'effectue entre les centres de concentration respectifs de la première cellule et de la seconde cellule qui sont impliqués sur le parcours de la station mobile.

L'invention offre une capacité spectrale accrue en obtenant un motif de réutilisation égal à 1 pour les fréquences de communication.

Cela est rendu possible par la mise en oeuvre de diverses techniques de limitation d'interférences :
- saut de fréquences. Par exemple, les lois de saut de fréquences sont orthogonales entre elles quand les communications sont initiées dans une même cellule et sont indépendantes entre elles quand les communications sont initiées dans des cellules adjacentes ;
- affectation de(s) relais pour le contrôle de chaque communication dans toutes les cellules de façon que la station mobile reste toujours en liaison (radio) avec au moins un (ou deux) relais.

La qualité de service est garantie par :
- une bonne couverture assurée par la multitude de relais composant chaque cellule ;
- une limitation optimale du nombre de "hand-overs" assuré par les transferts des communications intra- et extra-cellulaires (c'est en effet dans la majorité des cas au moment des "hand-overs"que les communications sont perdues).

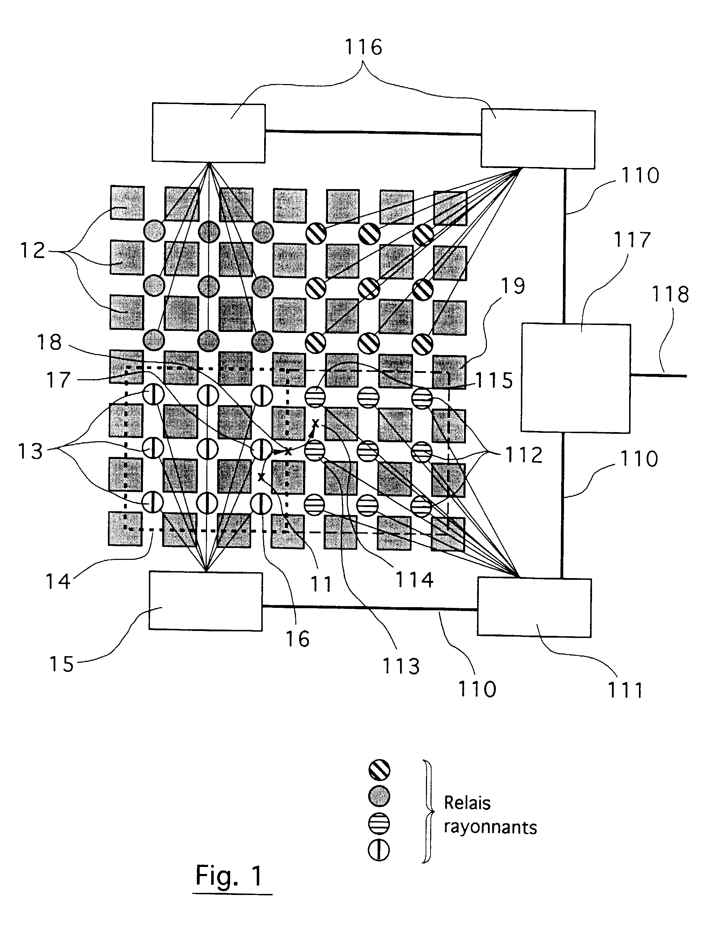

Dans l'exemple présenté sur la figure 1, une station mobile 11 se trouve dans une rue d'une zone urbaine où les bâtiments 12 sont nombreux.

En phase d'initialisation d'une communication, cette station mobile 11 est écoutée par tous les relais 13 de la cellule 14. Ainsi, lorsque la station mobile 11 envoie une requête (appel sortant) ou un message d'acquittement (appel entrant) sur un "burst" du canal "RACH" en GSM, tous les relais 13 le reçoivent. Ces relais 13 envoient les signaux reçus correspondants au centre de concentration 15 qui décide des relais à sélectionner pour poursuivre la communication en cours (présélection). Cette sélection est par exemple basée sur l'analyse du niveau de la puissance reçue par chaque relais pondéré par le rapport signal à interférences (ou le rapport signal à bruit) (par exemple pondération par les valeurs 0 ou 1 selon que le rapport signal à interférences est inférieur ou supérieur à un seuil prédéterminé). Durant cette phase, cette analyse est effectuée à partir de valeurs mesurées sur une seule trame.

Dans l'exemple présenté, ce sont les relais 16 et 17 qui sont présélectionnés car ils sont les plus proches de la station mobile 11 ou, plus exactement, ce sont ceux pour lesquels la communication est la meilleure.

Les relais 13 sont par ailleurs synchronisés au niveau bit et au niveau trame.

Lorsque la communication est établie (ou en phase de communication active), on tient compte pour chaque nouvelle sélection de(s) meilleur(s) relais seulement de(s) relais déjà affecté(s) à la communication en cours et de(s) relais disponible(s) et voisin(s) de ce(s) dernier(s). Ainsi, l'écoute et donc la sélection sont opérées par un nombre restreint de relais par rapport à la phase d'initialisation d'une communication.

Lors de cette phase de communication active, l'analyse peut s'effectuer sur une période de temps donnée (par exemple correspondant à un nombre de trames prédéterminé) pendant laquelle une moyenne des valeurs mesurées est calculée. On prend par exemple le niveau de la puissance moyenne reçue par chaque relais impliqué dans la communication, éventuellement pondéré par le rapport signal à interférences (ou le rapport signal à bruit).

La station mobile se déplace et se retrouve en position 18. En conséquence, elle passe de la cellule 14 à la cellule voisine 19.

Lors du passage de la station mobile de la première cellule 14 à la cellule 19, le centre de concentration 15 de la cellule origine 14 envoie au centre de concentration 111 de la cellule cible 19 notamment les paramètres suivants :
- une indication de désignation de la cellule 14 qui a initié la communication,
- une indication de désignation des relais 16 et 17 qui ont assuré une partie de la communication,
- les paramètres du numéro d'intervalle de temps dans une trame (ou "TN" pour "Time slot Number" en langue anglaise),
- le groupe de fréquences que la loi de saut de fréquence est autorisée à utiliser (ou "MA" pour "Mobile radio frequency channel allocation" en langue anglaise),
- le générateur de séquence de saut (ou "HSN" pour "Hopping Sequence Number" en langue anglaise),
- la première fréquence à utiliser (ou "MAIO" pour "Mobile Allocation Index Offset" en langue anglaise).

Ainsi, ces paramètres sont conservés pour assurer toute la communication. Cette communication peut donc continuer avec les mêmes paramètres sur un canal de communication unique. Ce canal de communication unique assure la communication sur une fréquence (pas de loi de saut de fréquences) ou sur un groupe de fréquences porteuses (utilisation d'une loi de saut de fréquences) qui est la/le même pour toute la communication, malgré le changement de cellule.

Les centres de concentration 15 et 111 sont synchronisés entre eux et avec leurs relais respectifs 13 et 112 au niveau bit et au niveau trame.

En fonction des informations qui lui sont parvenues, le centre de concentration 111 sélectionne le relais 113. Le centre de concentration 15 libère simultanément le relais 16. Ainsi, les deux relais les meilleurs sont en permanence sélectionnés.

La station mobile continue à se déplacer et arrive en position 114. Le relais 115 est alors sélectionné, et le relais 17 est libéré, car la qualité de la communication avec le relais 17 est devenue inférieure à un niveau prédéterminé.

La procédure de sélection des meilleurs relais est effectuée périodiquement, de façon à permettre un transfert de relais progressif, intra-cellulaire ou inter-cellulaire selon les besoins.

Les centres de concentration 15, 111, 116 communiquent (110) avec un contrôleur 117 de centres de concentration qui est en liaison 118 avec le reste du réseau de radio-communication cellulaire et numérique. Ils assurent la transmission des données cellule à cellule, et la synchronisation.

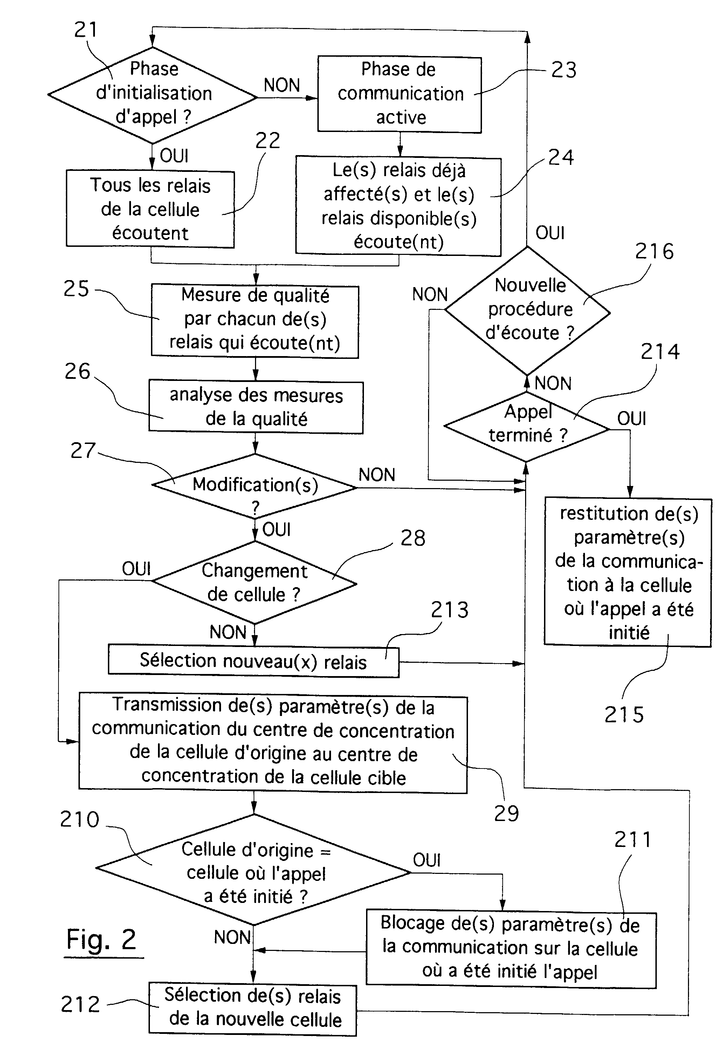

La figure 2 illustre de façon générale le procédé mis en oeuvre dans les cellules d'un système tel que décrit précédemment.

Lors de la phase d'initialisation d'une communication (21), une requête (appel sortant) ou un message d'acquittement (appel entrant) est envoyé sur un "burst" du canal "RACH" (pour "Random Access CHannel" en anglais) en GSM et tous les relais de la cellule écoutent (22) la station mobile qui initie l'appel, ou émettent vers la station mobile à contacter.

Si l'on est dans la phase suivante de communication active (23) (où l'appel est déjà établi), uniquement le(s) relais déjà affecté(s) et certains des relais disponible(s) écoutent (24) la station mobile en cours de communication.

On mesure régulièrement (25) (toutes les une ou deux secondes par exemple) la qualité de la réception (sur la voie montante) de chaque relais de la cellule qui écoute, pour toutes les communications suivies par un centre de concentration.

Puis, on analyse (26) ces mesures de qualité, de façon à repérer, par exemple les deux relais les plus efficaces.

Cette analyse (26) des mesures de qualité est effectuée :
- sur une seule trame, dans le cas d'une phase d'initialisation d'une communication. Par exemple, on prend une valeur mesurée du niveau de la puissance reçue par chaque relais de la cellule que l'on pondère par le rapport signal à interférences. Cette pondération consiste à multiplier la valeur du niveau de puissance reçue par 0 ou 1 selon que le rapport signal à interférences est inférieur ou supérieur à un seuil prédéterminé ;
- sur un nombre prédéterminé de trames correspondant à une durée fixée, dans le cas d'une phase d'une communication active. Par exemple, on prend des valeurs mesurées du niveau de la puissance moyenne reçue par le(s) relais déjà affecté(s) à la communication en cours et le(s) relais disponible(s) et voisin(s) de ce(s) dernier(s), que l'on pondère par le rapport signal à interférences respectif.

Il est clair que d'autres types de pondération peuvent être envisagés (par exemple en fonction du rapport signal à bruit, ou avec un nombre plus élevé de coefficients).

En fonction de l'analyse (26) des mesures de qualité, on décide (27) s'il convient de modifier la sélection des relais.

S'il convient de modifier la sélection des relais, on regarde (28) si la station mobile a changé de cellule.

Si la station mobile a changé de cellule, le centre de concentration attaché à la cellule d'origine transmet (29) le(s) paramètre(s) de la communication au centre de concentration associé à la cellule cible. Ainsi, chaque communication conserve le(s) même(s) paramètre(s) du début à la fin, notamment la loi de saut de fréquences qui lui est affectée, malgré le changement de cellule.

Puis, on examine (210) si la cellule d'origine est la cellule où a été initié l'appel.

Si la cellule d'origine de la station mobile est celle où l'appel a été initié, alors on bloque (211) le(s) paramètre(s) de la communication sur la cellule où a été initié l'appel. En d'autres termes, on interdit provisoirement leur utilisation par une autre communication.

Si la cellule d'origine de la station mobile n'est pas celle où a été initié l'appel, ou une fois effectuée le blocage (211) de(s) paramètre(s), le(s) relais le(s) plus efficace(s) de la cellule cible sont affecté(s) (212) à la communication. Dans le même temps, le(s) relais de la cellule d'origine sont désactivé(s), pour la communication.

S'il convient de modifier la sélection des relais (suite à la décision 27) et si la station mobile n'a pas changé de cellule (suite à l'étape 28), on sélectionne (213) de nouveau(x) relais plus efficace(s) que le(s) précédent(s). Simultanément, le(s) relais précédent(s) de la cellule sont désactivé(s).

S'il n'y a pas lieu de modifier la sélection de(s) relais (suite à la décision (27)), ou une fois la sélection (213) de nouveau(x) relais effectuée, ou suite à la sélection (212) de relais de la nouvelle cellule, on passe à l'étape suivante (214).

Si l'appel est terminé, ou si la station mobile est sortie de la zone de couverture du réseau de cellules à stations de base distribuées, la loi de saut de fréquences (et éventuellement un ou plusieurs autres paramètres) est restituée (215) à la cellule où l'appel a été initié.

Si l'appel n'est pas terminé, on détermine (216) si on engage une nouvelle procédure d'écoute.

Si l'appel n'est pas terminé et qu'une nouvelle procédure d'écoute est engagée alors on réitère les étapes (21 à 212).

Dans le cas contraire, on revient à l'étape (214).

## Revendications

1. Procédé de transfert de communication entre deux cellules (14) et (19) d'un réseau de radio-communication cellulaire et numérique,
caractérisé en ce que chacune desdites cellules comprend un ensemble d'au moins deux relais d'émission et de réception (13) géographiquement répartis dans ladite cellule, chacun desdits relais pouvant émettre des signaux vers des stations mobiles présentes dans une zone de ladite cellule, et recevoir des signaux émis par lesdites stations mobiles dans ladite zone, un jeu d'au moins un desdits relais (16) et (17) étant sélectivement affecté à chaque communication avec une station mobile (11), de façon que les échanges de signaux avec ladite station mobile (11) ne portent que sur une sous-partie de la cellule, et en ce que, lorsque ladite station mobile (11) passe d'une première cellule (14) à une seconde cellule (19), au moins un paramètre (29) caractérisant la communication de manière unique est transmis (110) de la station de base contrôlant ladite première cellule (14) à la station de base contrôlant ladite seconde cellule (19), de façon à permettre la continuité de l'utilisation dudit au moins un paramètre.

2. Procédé selon la revendication 1, caractérisé en ce que chacune desdites cellules comprend un centre de concentration (15), traitant les signaux reçus par chacun desdits relais (13), et délivrant à chacun desdits relais (13) des signaux à émettre,
et en ce que les centres de concentration (15), (111) et (116) et/ou les relais (13) d'un ensemble de cellules sont synchronisés.

3. Procédé selon la revendication 2, caractérisé en ce que la synchronisation s'effectue à deux niveaux :
- au niveau bit ;
- au niveau trame.

4. Procédé selon l'une quelconque des revendications 1 à 3, caractérisé en ce que chacune desdites communications met en oeuvre une technique de saut de fréquence.

5. Procédé selon l'une quelconque des revendications précédentes, caractérisé en ce que lesdites cellules utilisent, pour les communications, un même jeu de fréquences porteuses commun à toutes lesdites cellules, et en ce qu'une loi unique de saut de fréquences est affectée, lors d'une phase d'initialisation d'appel, à chacune desdites communications.

6. Procédé selon l'une quelconque des revendications précédentes, caractérisé en ce que chacune desdites cellules utilise au moins une fréquence balise qui lui est propre pour la transmission des données de signalisation.

7. Procédé selon l'une quelconque des revendications précédentes, caractérisé en ce que les communications de deux cellules adjacentes utilisent le même jeu de fréquences de communication,
et en ce que :
- les lois de saut de fréquences utilisées par des communications initiées au sein d'une même cellule sont orthogonales entre elles ;
- les lois de saut de fréquences utilisées par des communications initiées par deux cellules sont déterminées indépendamment les unes des autres.

8. Procédé selon l'une quelconque des revendications précédentes, caractérisé en ce que ledit au moins un paramètre (29) caractérisant la communication comprend au moins une des indications appartenant au groupe comprenant :
- un numéro d' intervalle de temps et un numéro de trame ;
- une indication de loi de saut de fréquences ;
- une indication des derniers meilleurs relais serveurs connus ;
- une indication de la cellule qui a initié la communication.

9. Procédé selon l'une quelconque des revendications précédentes, caractérisé en ce que chacune desdites cellules met en oeuvre une étape de sélection des meilleurs relais (211), selon un critère de sélection prédéterminé, pour chaque station mobile (11) en communication, et en ce que l'affectation d'un jeu de relais (16) et (17) à ladite communication et le transfert de ladite première cellule (14) à ladite seconde cellule (19) tiennent compte de ladite sélection.

10. Procédé selon la revendication 9, caractérisé en ce que ledit critère de sélection repose sur l'analyse (26) d'au moins une des informations appartenant au groupe comprenant :
- la puissance reçue par ledit relais pour ladite communication ;
- le rapport signal à bruit pour ladite communication ;
- le rapport signal à interférences pour ladite communication ;
- un taux d'erreur brut et/ou après décodage pour ladite communication ;
- un taux de perte de trame pour ladite communication ;
- une indication de positionnement géographique.

11. Procédé selon l'une quelconque des revendications précédentes, caractérisé en ce que ladite analyse (26) d'au moins une desdites informations s'effectue à partir :
- d'une moyenne des valeurs mesurées d'au moins une desdites informations sur une durée prédéterminée, lors d'une phase de communication active (24) ;
- d'une unique valeur mesurée d'au moins une desdites informations, lors d'une phase d'initialisation d'une communication (22).

12. Procédé selon la revendication 9 ou 10, caractérisé en ce que ledit jeu de relais (16) et (17) comprend un nombre prédéterminé n des meilleurs relais selon ledit critère de sélection.

13. Procédé selon l'une quelconque des revendications précédentes, caractérisé en ce que l'affectation d'un jeu de relais est mise à jour périodiquement et/ou lorsqu'au moins un paramètre représentatif de la qualité de la communication est inférieur à un seuil prédéterminé (27).

14. Procédé selon l'une quelconque des revendications précédentes, caractérisé en ce que chaque communication se voit affecter, lors de sa phase d'initialisation d'appel, une loi unique de saut de fréquences qui lui est propre et qu'elle conserve lors du transfert de ladite première cellule (14) à ladite seconde cellule (19), et en ce que ladite loi de saut de fréquences propre à ladite communication est restituée à la cellule (14) où l'appel a été initié lorsque ladite communication est terminée et/ou lorsque ladite station mobile (11) est sortie de la zone de couverture dudit réseau.

15. Procédé selon l'une quelconque des revendications précédentes, caractérisé en ce que, lors d'une phase d'initialisation d'une communication (22), ladite étape de sélection est effectuée sur tous les relais (112) de ladite cellule (19), de façon à effectuer une présélection des meilleurs relais (113, 115) pour continuer ladite communication .

16. Procédé selon l'une quelconque des revendications précédentes, caractérisé en ce que, lors d'une phase de communication active (24), ladite étape de sélection est effectuée uniquement sur les relais (113,115) déjà affectés et au moins certains relais disponibles (112), de façon à réactualiser la sélection des meilleurs relais.
